# DEMANDE DE BREVET EUROPEEN

(11) **EP 1 920 815 A2**
(43) Date de publication de la demande: **14.05.2008**
(21) Numéro de dépôt: 07118235.6
(22) Date de dépôt: 10.10.2007
(51) Int. Cl.: B01D 35/32, B01D 53/72

(54) **Procédé de traitement du méthane imbrûlé par oxydation par plasma**

(30) Priorité: 30.10.2006 FR 0654625
(71) Demandeur: GAZ DE FRANCE, 75017 Paris (FR); UNIVERSITE PIERRE ET MARIE CURIE, 75005 Paris (FR)
(72) Inventeur: Da Costa, Stéphanie, 93500 Pantin (FR); Tena, Emmanuel, 71600 Varenne St-Germain (FR); Da Costa, Patrick, 93500 Pantin (FR); Cuelhlo Marques Rui Miguel Jorge, 75017 Paris (FR); Djega Mariadassou, Gérald, 91430 Igny (FR)
(74) Mandataire: David, Alain

(57) **Abrégé**

Procédé de traitement d'un résidu de méthane dans un mélange gazeux ayant une température comprise entre 200 et 500°C et comportant au moins du méthane dans une proportion comprise entre 50 et 2500 ppm et de l'oxygène dans une proportion comprise entre 0,5 et 12% en volume. Selon l'invention, le résidu de méthane est traité par un plasma de densité d'énergie comprise entre 15 et 100 J/L généré dans un réacteur plasma (10) en appliquant un signal électrique de haute tension entre une électrode interne (16) et une électrode externe (12) du réacteur plasma (10), l'électrode externe (12) étant de forme cylindrique et entourant l'électrode interne (16), et au moins l'une des électrodes étant recouverte d'un matériau diélectrique pour créer une décharge à barrière diélectrique dans le mélange gazeux et convertir en partie le résidu de méthane en monoxyde de carbone.

## Description

### Domaine de la technique

La présente invention concerne le domaine du traitement des effluents gazeux et plus particulièrement elle se rapporte au traitement des résidus du méthane issus de la combustion du gaz naturel ou tout type de combustibles ou carburants liquides (essence, gazole, fuel lourd, etc.).

### Etat de la technique

Six gaz à effet de serre ont été recensés comme ayant un impact important sur le réchauffement de la planète : le dioxyde de carbone CO₂, le méthane CH₄, l'oxyde nitreux N₂O, les hydrofluorocarbones HFC, les hydrocarbures perfluorés PFC et l'hexafluorure de soufre SF₆. Cependant, avec un impact 23 fois plus important que le CO₂ (à quantité massique identique) sur le réchauffement de l'atmosphère, le méthane est l'un des gaz à effet de serre dont la diminution présente le plus grand intérêt.

La combustion du gaz naturel pour les sources dites fixes ou stationnaires (turbines à gaz, chaudières) est plus propre que la combustion des carburants liquides ou du charbon. Néanmoins, la combustion du méthane, constituant majoritaire du gaz naturel à 90-95 %, peut être incomplète. Ainsi, afin de maintenir l'intérêt environnemental de telles sources à gaz stationnaires, il apparaît primordial de réduire les émissions de méthane.

Aujourd'hui, la seule technique utilisée pour éliminer le méthane imbrûlé dans les moteurs à gaz est la catalyse. Suivant le fonctionnement du moteur, les catalyseurs peuvent être de type à oxydation (pour une combustion pauvre en combustible) ou 3 voies (pour une combustion stoechiométrique).

La combustion en mélange pauvre souffre principalement des faibles températures à l'échappement : le catalyseur, à base de palladium, doit être très chargé en métal précieux et volumineux pour posséder une activité suffisante. On se retrouve ainsi avec des catalyseurs encombrants, chers et rapidement désactivés par le soufre résiduel.

La combustion stoechiométrique permet une température d'opération du catalyseur plus élevée. Il en résulte une meilleure activité du catalyseur et un empoisonnement moindre par le soufre du fait de l'utilisation possible du platine au lieu du palladium (très sensible au soufre). Par contre, le catalyseur peut être soumis à des températures très élevées et subir une forte désactivation thermique. De plus, un tel fonctionnement stoechiométrique est de moins en moins utilisé (surtout pour les puissances élevées) à cause de son rendement moindre de 15 à 20 % par rapport à un fonctionnement en mélange pauvre.

### But et objet de l'invention:

La présente invention propose donc une méthode alternative aux méthodes actuelles pour éliminer le méthane imbrûlé dans tous types de sources de combustion, telles que les chaudières, les moteurs, en particulier les moteurs à allumage par compression d'une charge homogène (HCCI) ou les moteurs à gaz.

Ce but est atteint par un procédé de traitement d'un résidu de méthane dans un mélange gazeux, ledit procédé comprenant une étape d'introduction dudit mélange gazeux dans un réacteur plasma et une étape de génération d'un plasma dans ledit réacteur plasma; ledit procédé étant caractérisé en ce le mélange gazeux introduit dans le réacteur plasma a une température comprise entre 200 et 500°C et comporte au moins du méthane dans une proportion comprise entre 50 et 2500 ppm et de l'oxygène dans une proportion comprise entre 0,5 et 12% en volume ; et en ce qu'un plasma de densité d'énergie comprise entre 15 et 100 J/L est généré lors de l'étape de génération du plasma, en appliquant un signal électrique de haute tension entre une électrode interne et une électrode externe du réacteur plasma, ladite électrode externe étant de forme cylindrique et entourant l'électrode interne, et au moins l'une des électrodes étant recouverte d'un matériau diélectrique pour créer une décharge à barrière diélectrique dans le mélange gazeux et convertir en partie le résidu de méthane en monoxyde de carbone.

Ainsi, d'une part, le traitement du résidu de méthane par un plasma froid de densité d'énergie comprise en 15 et 100 J/L permet avantageusement de convertir le résidu de méthane en monoxyde de carbone sans générer d'hydrocarbures.

La plage de densité d'énergie 15-100 J/L est tout particulièrement bien adaptée pour le traitement d'un mélange gazeux comportant au moins du méthane dans une proportion comprise entre 50 et 2500 ppm et de l'oxygène dans une proportion comprise entre 0,5 et 12% en volume.

D'autre part, le fait que l'une ou l'autre des électrodes du réacteur plasma soit recouverte d'un diélectrique permet de créer une décharge à barrière diélectrique dans le mélange gazeux au sein du réacteur plasma. Ceci a pour avantage de limiter le courant dans le plasma et de fournir des streamers permettant d'obtenir des électrons très énergétiques sans transfert thermique significatif.

De manière avantageuse, il est en outre possible, de traiter une grande partie des espèces contenues dans le réacteur plasma même si le volume propre de chaque *"streamer"* reste très faible par rapport au volume du réacteur.

Selon une caractéristique de la présente invention, le plasma a une densité d'énergie comprise entre 36 et 58 J/L.

Cette plage de densité d'énergie est avantageusement choisie afin d'éviter des réactions parasites, telles que la formation de NOₓ à haute température. Ainsi, pour une température donnée (par exemple à 475°C), une densité d'énergie du plasma comprise entre 36 et 58 J/L permet d'obtenir le meilleur compromis entre d'une part la formation néfaste de NOₓ et d'autre part la conversion du méthane.

Selon un mode de réalisation de la présente invention, le mélange issu du réacteur plasma est ensuite introduit dans un dispositif à catalyse comprenant un catalyseur destiné à assurer une conversion du mélange résiduel en dioxyde de carbone.

Selon un autre mode de réalisation de la présente invention, le catalyseur est déposé dans le réacteur plasma.

Ainsi, en couplant un plasma froid à une oxydation catalytique du méthane résiduel, il n'est pas nécessaire de chauffer le mélange gazeux à traiter en sus de sa température naturelle.

Selon une autre caractéristique de la présente invention, le catalyseur est un oxyde du type alumine, silice ou un mélange des deux.

Selon une autre caractéristique de la présente invention, le catalyseur est choisi parmi les catalyseurs à base des métaux suivants : Pt 0,1 à 1% massique, Pd 0,1 à 2% massique ou un mélange des deux.

Selon une autre caractéristique de la présente invention, le mélange gazeux introduit dans le réacteur comprend en outre de l'eau dans une proportion comprise entre 2 à 15 % en volume.

Contrairement aux procédés traditionnels où l'eau a un effet inhibiteur sur le catalyseur, la présence d'eau conformément à la présente invention a un effet promoteur sur la réaction d'oxydation totale. Ainsi, la conversion du méthane avec le plasma en combinaison avec le catalyseur est améliorée en présence d'eau. En particulier, l'eau provenant de la combustion d'un carburant à l'état gazeux ou liquide est à l'origine de la création de radicaux très réactifs tels que OH^{•} qui ont pour effet d'augmenter le taux de conversion du méthane en sortie du dispositif à catalyse ou en sortie du réacteur plasma lorsque celui-ci comporte le catalyseur.

La présente invention vise également l'utilisation du procédé ci-dessus pour traiter le résidu de méthane d'un mélange gazeux provenant de la combustion du gaz naturel ou d'un carburant liquide ou d'une source de combustion fixe ou mobile pouvant par exemple être un moteur ou une chaudière.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique illustrant un dispositif de traitement de méthane imbrûlé selon l'invention,
- la figure 2 montre une courbe illustrant la conversion du méthane en fonction de la température dans le dispositif de la figure 1,
- la figure 3 montre une courbe illustrant la concentration de NOₓ en fonction de la température pour différentes densités d'énergie,

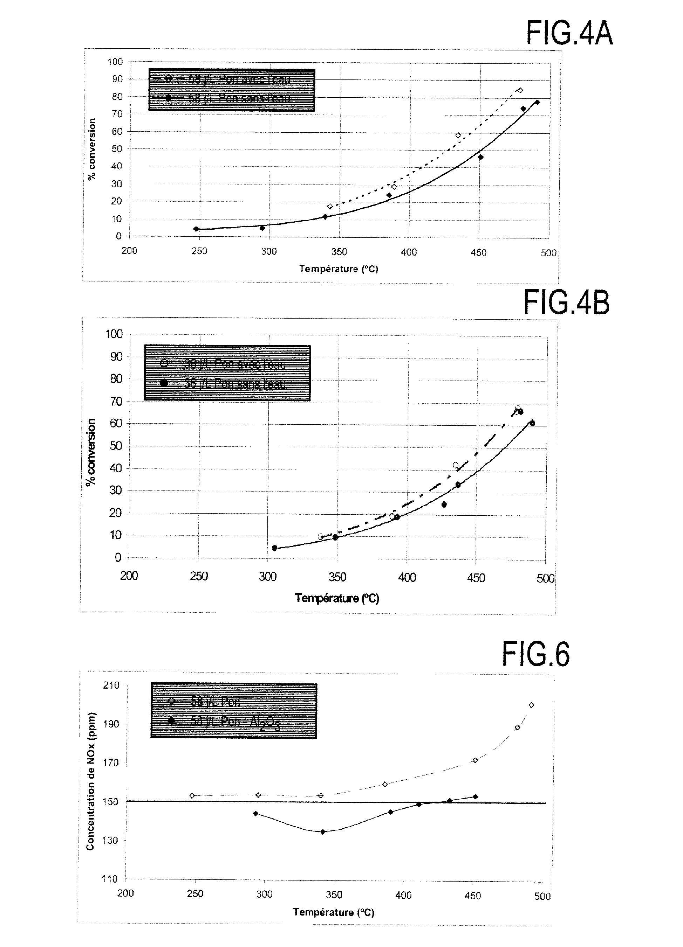

- les figures 4A et 4B montrent une courbe illustrant la conversion du méthane en fonction de la température pour différentes densités d'énergie,

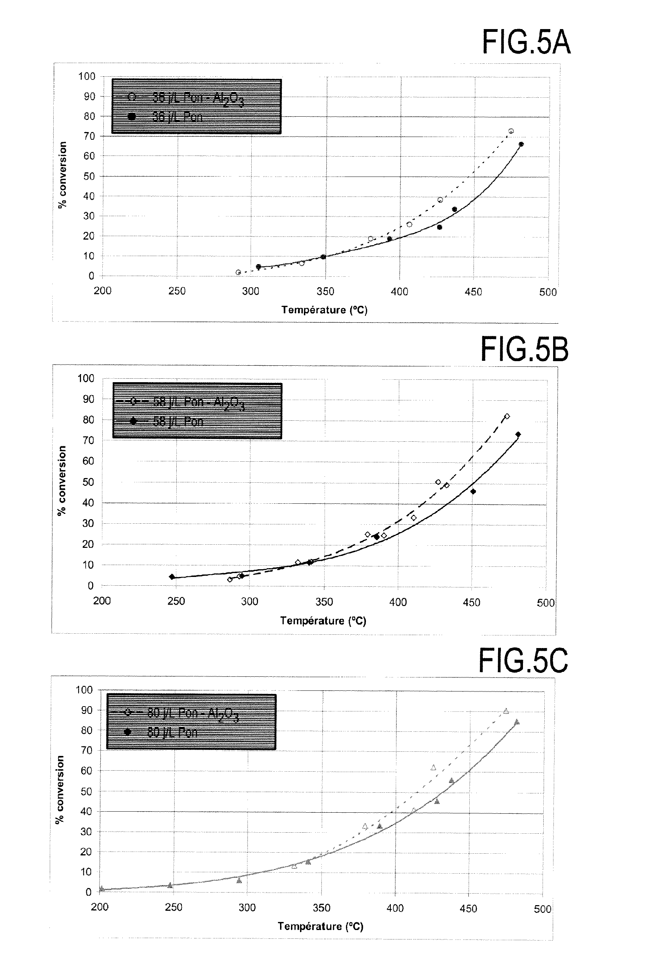

- les figures 5A, 5B et 5C montrent une courbe illustrant la conversion du méthane en fonction de la température avec ou sans adjonction d'un catalyseur Al₂O₃,
- la figure 6 montre une courbe illustrant la concentration de NOₓ en fonction de la température pour différentes densités d'énergie avec ou sans adjonction d'un catalyseur Al₂O₃,
- les figures 7A et 7B montrent une courbe illustrant la conversion du méthane en fonction de la température pour différentes densités d'énergie avec ou sans adjonction d'un catalyseur Pt/Al₂O₃, et
- la figure 8 montre une courbe illustrant la conversion du méthane en présence d'eau en fonction de la température pour différentes densités d'énergie avec ou sans adjonction d'un catalyseur Pt/Al₂O₃.

### Description détaillée de modes de réalisation préférentiels

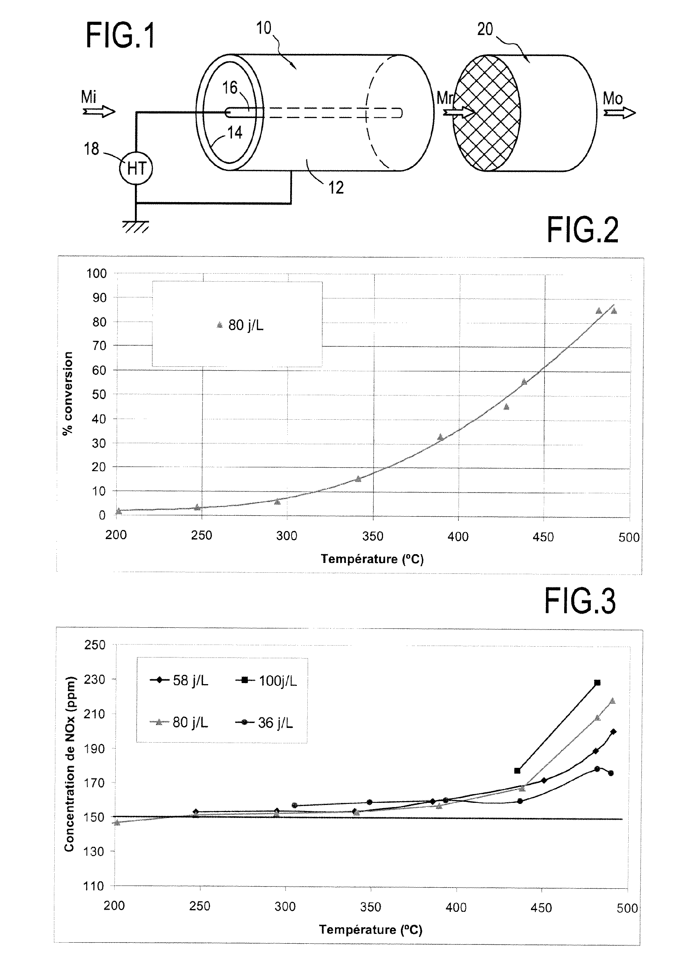

La figure 1 illustre de façon schématique un dispositif de traitement de méthane imbrûlé destiné à être placé en sortie d'un moteur stationnaire comme une chaudière à gaz par exemple.

Il comporte essentiellement un réacteur plasma 10 dans lequel une décharge à barrière diélectrique (DBD) est appliquée sur le mélange gazeux issu du moteur et comprenant un résidu de méthane à traiter. Les décharges de type DBD se différencient des décharges directes classiques par le fait qu'elles ont au moins une électrode recouverte d'un matériau diélectrique (verre, plastique, céramique, ...). Cette configuration permet de limiter le courant dans le plasma. Comme dans l'ensemble des systèmes DBD, les plasmas générés se composent d'une multitude de micro-décharges filamentaires appelées *"streamers".* Ces derniers de diamètre apparent de l'ordre de 150 µm sont répartis aléatoirement et perpendiculairement à l'axe du réacteur. Le grand intérêt des DBD pour les applications chimiques est directement lié à la nature même des *"streamers"* qui permettent d'obtenir des électrons très énergétiques sans transfert thermique significatif. Il est possible, d'autre part, de traiter le résidu de méthane et une grande partie des espèces dérivées notamment le formaldéhyde, même si le volume propre de chaque *"streamer"* reste très faible par rapport au volume du réacteur.

Le réacteur plasma 10 utilisé est de préférence du type fil-cylindre avec une électrode externe 12 cylindrique, formée par exemple d'une grille en laiton et recouverte sur sa face interne d'un diélectrique 14 et une électrode interne 16 filaire et montée dans l'axe de l'électrode externe 12. La longueur des électrodes peut être ajustée et détermine ainsi le volume du réacteur plasma 10. Ces deux électrodes 12, 16 sont reliées à un générateur à haute tension 18 dont la fréquence est adaptée pour produire une décharge électrique pulsée entre les deux électrodes ayant une densité d'énergie prédéterminée comprise entre 15 et 100 J/L.

En aval de ce réacteur plasma 10 est disposé un dispositif à catalyse 20 de structure conventionnelle comprenant un catalyseur qui est destiné à traiter par catalyse le mélange résiduel Mr résultant du traitement précédent dans le réacteur plasma 10. Le catalyseur est de préférence du type Pt/Al₂O₃ ou encore Pd/Al₂O₃ avec une teneur en masse de Pt de 0,1 à 1% et de Pd de 0,1 à 2 %. Mais un catalyseur à base d'un autre métal tel que Rh, Au ou Ag ou une combinaison de ces métaux avec une teneur en masse de 0,1 à 2% est aussi envisageable.

Le fonctionnement du procédé de traitement mis en oeuvre dans le dispositif de la figure 1 est le suivant. Le mélange gazeux Mi issu d'un moteur stationnaire à une température comprise entre 200 et 500°C et comportant du méthane imbrûlé dans une proportion comprise entre 50 et 2500 ppm et de l'oxygène dans une proportion de 0,5 à 12 % en volume est introduit dans le réacteur 10. Sous l'action de la décharge électrique produite entre les deux électrodes 16, 12 du réacteur 10 par le générateur haute tension 18, le mélange gazeux se transforme en plasma.

La figure 2 montre qu'avec une proportion de CH₄ de 1000 ppm et une densité d'énergie de 80 J/L, l'effet plasma convertit alors 80 % du méthane à 475°C. La présence éventuelle de CO₂ (8% en volume dans l'exemple illustré) dans le mélange gazeux Mi n'a pas d'effet sur la conversion du méthane qui s'opère dès les basses températures (200°C). Le produit majoritaire de la réaction est le monoxyde de carbone CO, la formation de CO est même supérieure à la conversion de CH₄. Cet excès de CO provient en effet de la conversion de CO₂ lorsqu'il est présent, en CO par le plasma. Ainsi, CO₂ conduit à CO^{•} et O^{•} conduisant à CO en phase gaz. En sortie du réacteur 10, le mélange résiduel Mr peut être introduit dans le dispositif à catalyse 20 qui délivrera à sa sortie un mélange Mo dans lequel le méthane imbrûlé initial aura été pratiquement totalement converti en dioxyde de carbone.

On décrira ci-après les conditions opératoires dans lesquelles les essais ont été effectués.

Selon un mode de réalisation, le réacteur plasma 10 et le dispositif à catalyse 20 sont intégrés. Ainsi, les réactions se déroulent à pression atmosphérique dans un réacteur plasma 10 sur lequel est déposé le catalyseur. Le réacteur est traversé par le mélange gazeux à traiter. Le débit gazeux est fixé à 250 ml/min. La masse de catalyseur est déposée sur un fritté et dépend de la VVH (Volume des fumées/Volume de catalyseur/Heure) choisie. L'activité catalytique est mesurée de 200°C à 500°C, par paliers successifs de température. L'activité sur chaque palier est mesurée pendant environ 15 min.

L'électrode externe 12 du réacteur plasma 10 est un tube en quartz comportant un fritté de porosité zéro de diamètre intérieur égal à 12 mm et d'épaisseur 1 mm et l'électrode interne 12 est une tige de tungstène de 0,9 mm. Les électrodes ont une longueur de 15 cm. La distance inter-électrodes est de 5,5 mm. Le générateur haute tension 18 délivre des impulsions de tension de l'ordre de 20kV et de fréquence variable allant jusqu'à 200Hz assurant ainsi au plasma la densité d'énergie désirée de 5J/L à 100J/L.

Un µ-chromatographe (par exemple le modèle AGILENT G2890A), équipé d'un détecteur à conductivité thermique placé en sortie de réacteur permet d'obtenir différents résultats de mesure. Cet appareil est notamment capable de détecter le méthane résiduel. La possible formation de CₓH_{y}O_{z} et R-NOₓ peut être suivie à l'aide d'un chromatographe en phase gazeuse (par exemple les modèles AGILENT 6890N et 5973N). La formation de CO₂, N₂O, NO et NOₓ est suivie par des détecteurs spécifiques (par exemple les modèles SIEMENS ultramat 6E et SIEMENS CLD 700 AL).

Les différents exemples illustrés ci-après ont été réalisés à partir d'un mélange à traiter ayant la composition suivante : CH₄ : 1000 ppm, NO : 150 ppm, O₂ : 7 vol. %, CO₂ : 8 vol. % et lorsqu'il est présent H₂O : 3 vol. % et permettent d'apprécier les paramètres essentiels intervenant dans le procédé de traitement de l'invention. Mais bien entendu, ces exemples ne doivent pas être considérés comme limitatifs et les résultats obtenus restent largement valables avec un mélange gazeux à traiter dont la composition reste dans les plages suivantes :
CH₄ : 50 à 2500 ppm, NO : 0 à 4000 ppm, O₂ : 0,5 à 12 vol. %, CO₂ : 0 à 25 vol. % et H₂O - 2 à 15 vol. %.

### EXEMPLE 1

### Effet de la densité d'énergie sur la conversion du méthane

Il existe un effet de la densité d'énergie du plasma sur la conversion du méthane comme le montre le tableau 1.

**Tableau 1 : Conversion du méthane en fonction de la densité d'énergie du plasma à 450°C.**

| **Densité d'énergie (J/L)** | 15 | 36 | 58 | 80 | 100 |
|---|---|---|---|---|---|
| **Conversion du méthane (%)** | 18 | 39 | 50 | 63 | 75 |

En outre, le plasma crée des NOₓ (figure 3) sous forme de NO₂ à partir de 375°C et plus la densité d'énergie est grande, plus il y a de NOₓ formés. En l'absence de CO₂, la formation de NOₓ commence également environ dès 375°C. Le meilleur compromis entre la formation de NOₓ et la conversion du méthane est obtenu pour des densités de 36 et 58 J/L. On notera le décalage des courbes résultant simplement de la présence initiale de 150 ppm de NOₓ dans le mélange réactionnel.

### EXEMPLE 2

### Effet de l'eau sur la conversion du méthane

L'eau a un effet promoteur sur la conversion du méthane avec le plasma en présence d'un catalyseur, comme le montre le tableau 2, contrairement à son effet inhibiteur bien connu sur les catalyseurs.

**Tableau 2 : Effet de l'eau sur l'activité du plasma en oxydation du méthane à 450°C**

| **Densité d'énergie (J/L)** | 36 | 58 |
|---|---|---|
| Conversion du méthane (%) sans H₂O | 39 | 50 |
| Conversion du méthane (%) avec H₂O à 3 vol. % | 48 | 64 |

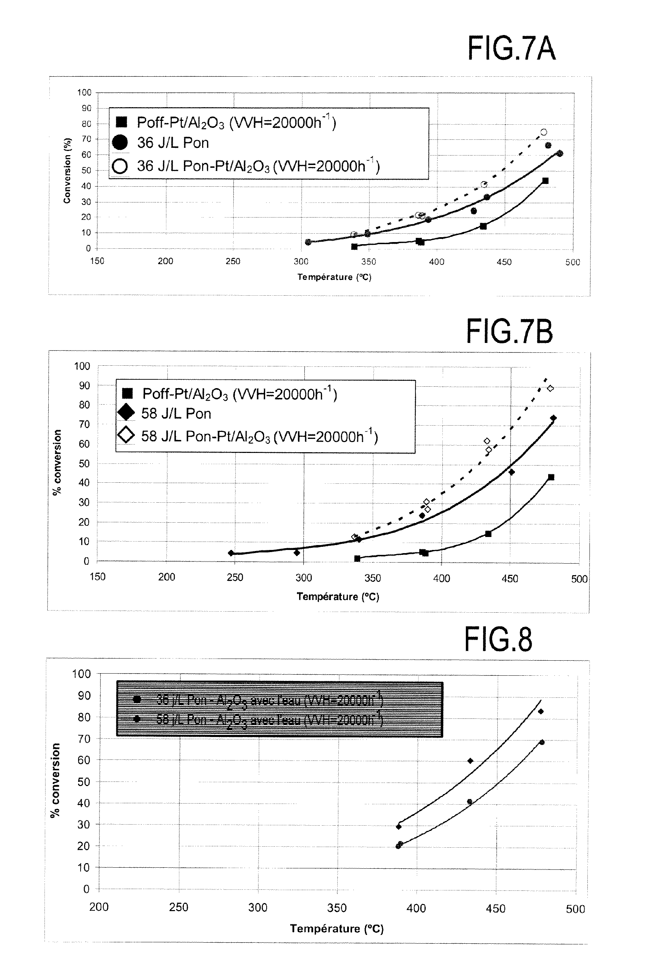

(figures SA, 5B et 5C). Et, on notera que la formation de NOₓ est très réduite à haute température avec le couplage Plasma-Alumine par rapport au plasma seul (figure 6).

**Tableau 3 : Effet du couplage Plasma-Al₂O₃ (Alumine) sur la conversion du méthane à 450°C**

| **Densité d'énergie (J/L)** | 36 | 58 | 80 |
|---|---|---|---|
| **Conversion du méthane (%) Plasma seul** | 39 | 50 | 63 |
| **Conversion du méthane (%) Plasma+Alumine** | 53 | 63 | 74 |

Des résultats semblables (augmentation de la conversion du méthane avec la densité d'énergie, formation réduite de NOₓ) ont été obtenus avec de la silice qui permet une meilleure conversion du couple plasma/catalyseur que le plasma seul. Un mélange alumine-silice améliore encore ces résultats.

### EXEMPLE 4

### Effet du rapport Volume des fumées/Volume de catalyseur/Heure (VVH) sur la conversion du méthane

Comme le montre le tableau 4 comparatif des résultats obtenus à 20 000 h⁻¹ et 40 000 h⁻¹, plus la WH est faible, plus la conversion du méthane augmente alors que la formation de NOₓ diminue.

**Tableau 4 : Effet de la VVH sur la conversion du CH₄ avec et sans couplage Plasma-Al₂O₃ (Alumine)**

| **T = 450°C,** | Alumine | Plasma+Alumine | Alumine | Plasma+Alumine |
|---|---|---|---|---|
| **D = 36 J/L** | 20 000 h⁻¹ | 20 000 h⁻¹ | 40 000 h⁻¹ | 40 000 h⁻¹ |
| **Conversion du CH₄ (%)** | 9 | 53 | 3 | 48 |

### EXEMPLE 5

### Effet de l'adjonction d'un catalyseur 0,36wt% Pt/Al₂O₃

Le catalyseur Pt/Al₂O₃ se désactivant à haute température dû au frittage de la phase métallique, tous les essais ont donc été réalisés après stabilisation de l'activité catalytique.

Il ressort que le système plasma/Pt/Al₂O₃ est nettement plus actif en oxydation du méthane que le plasma seul comme le montre le tableau 5. La conversion du méthane augmente très fortement avec le système plasma/catalyseur (figures 7A et 7B). De plus, la conversion augmente sensiblement avec la densité d'énergie du plasma (figure 8).

On notera que les conversions du méthane obtenues avec le plasma seul et le système plasma/catalyseur sont relativement proches. Néanmoins, dans ce dernier cas, le seul produit de la réaction est le CO₂ (pas de détection d'espèces partiellement oxydées ou de CO).

**Tableau 5 : Effet de l'adjonction d'un catalyseur 0,36wt% Pt/Al₂O₃ sur la conversion du CH₄ à 450°C**

| **Densité d'énergie** | 36 J/L | **58 J/L** |
|---|---|---|
| **Conversion du méthane (%) Plasma seul** | 39 | 50 |
| **Conversion du méthane (%)** | 54 | 70 |
| **Plasma+Catalyseur 0,36wt% Pt/Al₂O₃** | | |

### EXEMPLE 6

### Effet de l'adjonction de catalyseurs 0,50wt% Pd/Al₂O₃ et 1,66wt% Pd/Al₂O₃

Il est connu que l'activité en oxydation du méthane des catalyseurs Pd/Al₂O₃ est relativement faible (48 % pour le catalyseur 1,66wt% Pd/Al₂O₃).

Avec l'invention, le couplage plasma/catalyseur permet d'augmenter la conversion du méthane comme le montre le tableau 6. Ainsi, à 450°C, on obtient 64 % de conversion du méthane avec le système plasma/1,66wt% Pd/Al₂O₃ (D = 58 J/L et WH = 400 000 h⁻¹).

**Tableau 6 : Effet de l'adjonction de catalyseurs 0,5wt% Pd/Al₂O₃ et 1,66wt% Pd/Al₂O₃ sur la conversion du méthane à 450°C**

| **Densité d'énergie** | **36 J/L** | **58 J/L** |
|---|---|---|
| **Conversion du méthane (%) Plasma seul** | 39 | 50 |
| **Conversion du méthane (%)** | 68 | 71 |
| **Plasma+Catalyseur 0,5wt% Pd/Al₂O₃** | | |
| **Conversion du méthane (%)** | 59 | 64 |
| **Plasma+Catalyseur 1,66wt% Pd/Al₂O₃** | | |

Ainsi, l'utilisation d'un plasma froid pour traiter les émissions de méthane imbrûlé issues des moteurs stationnaires s'avère efficace dès 200°C. On aura aussi noté que l'eau a un effet promoteur sur la conversion du méthane avec le plasma en présence d'un catalyseur De plus, avec le catalyseur Pt/Al₂O₃, le couplage plasma/catalyseur s'avère particulièrement intéressant, les catalyseurs à base de platine étant déjà installés sur les moteurs stationnaires pour le traitement du CO. Dans ce cas, la structure de l'invention se résume à rajouter simplement un générateur de plasma 10 en amont du dispositif à catalyse 20. Dans cet autre mode de réalisation, le mélange issu du générateur de plasma est introduit dans le dispositif à catalyse comprenant un catalyseur destiné à assurer une conversion du mélange résiduel en dioxyde de carbone.

## Revendications

1. Procédé de traitement d'un résidu de méthane dans un mélange gazeux, ledit procédé comprenant une étape d'introduction dudit mélange gazeux dans un réacteur plasma (10) et une étape de génération d'un plasma dans ledit réacteur plasma (10), ledit procédé étant **caractérisé en ce que** :
- le mélange gazeux introduit dans le réacteur plasma (10) a une température comprise entre 200 et 500°C et comporte au moins du méthane dans une proportion comprise entre 50 et 2500 ppm et de l'oxygène dans une proportion comprise entre 0,5 et 12% en volume ;
- et **en ce qu'**un plasma de densité d'énergie comprise entre 15 et 100 J/L est généré lors de l'étape de génération du plasma, en appliquant un signal électrique de haute tension entre une électrode interne (16) et une électrode externe (12) dudit réacteur plasma (10), ladite électrode externe (12) étant de forme cylindrique et entourant l'électrode interne (16), et au moins l'une desdites électrodes étant recouverte d'un matériau diélectrique pour créer une décharge à barrière diélectrique dans le mélange gazeux et convertir en partie le résidu de méthane en monoxyde de carbone.

2. Procédé selon la revendication 1, **caractérisé en ce que** le plasma a une densité d'énergie comprise entre 36 et 58 J/L.

3. Procédé de traitement selon la revendication 1 ou la revendication 2, **caractérisé en ce que** le mélange issu du réacteur plasma (10) est ensuite introduit dans un dispositif à catalyse (20) comprenant un catalyseur destiné à assurer une conversion du mélange résiduel en dioxyde de carbone.

4. Procédé de traitement selon la revendication 1 ou la revendication 2, **caractérisé en ce qu'**un catalyseur est déposé dans le réacteur plasma (10).

5. Procédé de traitement selon la revendication 3 ou la revendication 4, **caractérisé en ce que** ledit catalyseur est un oxyde du type alumine, silice ou un mélange des deux.

6. Procédé de traitement selon la revendication 3 ou la revendication 4, **caractérisé en ce que** ledit catalyseur est choisi parmi les catalyseurs à base des métaux suivants : Pt 0,1 à 1% massique, Pd 0,1 à 2% massique ou un mélange des deux.

7. Procédé selon l'une quelconque des revendications 3 à 6, **caractérisé en ce que** ledit mélange gazeux comprend en outre de l'eau dans une proportion comprise entre 2 et 15 % en volume.

8. Utilisation du procédé de traitement selon l'une quelconque des revendications 1 à 7, **caractérisé en ce que** ledit mélange gazeux provient de la combustion du gaz naturel ou d'un carburant liquide ou d'une source de combustion fixe ou mobile.

9. Utilisation selon la revendication 8, **caractérisé en ce que** ladite source est un moteur.

10. Utilisation selon la revendication 8, **caractérisé en ce que** ladite source est une chaudière.
